# FASCICULE DE BREVET EUROPEEN

(11) **EP 0 957 652 B1**
(45) Date de publication et mention de la délivrance du brevet: **14.11.2001**
(21) Numéro de dépôt: 99400693.0
(22) Date de dépôt: 22.03.1999
(51) Int. Cl.: H04Q 7/38

(54) **Interruption de service dans un réseau téléphonique mobile**
Dienstunterbrechung in einem Mobiltelefonnetz
Interruption of service in a mobile telephone network

(30) Priorité: 14.05.1998 FR 9806086
(43) Date de publication de la demande: 17.11.1999
(73) Titulaire: ALCATEL, 75008 Paris (FR)
(72) Inventeur: Charpentier, Jean, 78220 Viroflay (FR); Issenmann, Edouard, 78150 Le Chesnay (FR)
(74) Mandataire: Sciaux, Edmond

(56) Documents cités:
- WO-A-98/19473
- US-A- 5 420 910

## Description

La présente invention a pour objet un procédé d'interruption de service dans un réseau téléphonique mobile.

L'invention concerne les réseaux de télécommunications mobiles numériques. Elle s'applique notamment au réseau GSM. Un des problèmes qui se pose dans de tels réseaux mobiles est celui de l'interruption des activités d'un abonné.

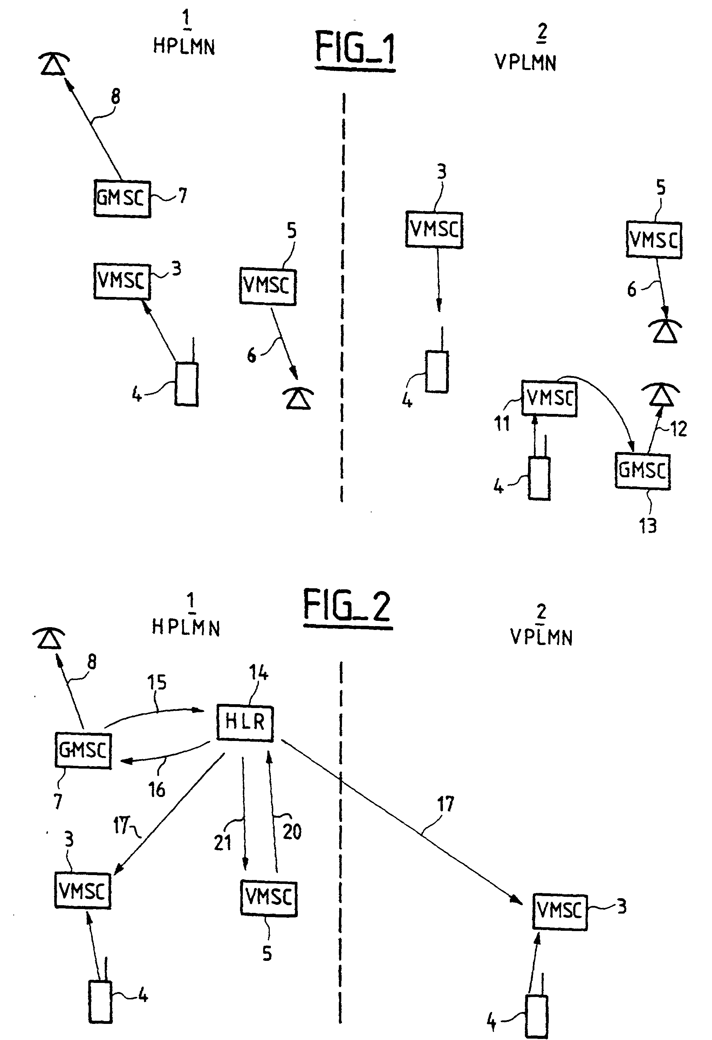

Des systèmes d'interruption d'appel ont été proposés dans le cadre du GSM. Le service IST (acronyme de l'anglais immediate service termination, ou interruption immédiate du service) doit permettre, pour un abonné donné, de faire cesser les appels en cours, dans le PLMN (acronyme de l'anglais public land mobile network, ou réseau terrestre public mobile), par exemple au moment de la résiliation d'un abonnement ou lorsque l'opérateur a de bonnes raisons de penser qu'il y a une fraude potentielle. L'interruption de l'abonnement peut concerner les divers types d'appel qu'un abonné peut générer, et qui sont maintenant expliqués en référence à la figure 1. Cette figure montre deux PLMN, à savoir le réseau public mobile d'origine 1 de l'abonné ou HPLMN (acronyme de l'anglais home PLMN), et un réseau 2 dans lequel l'abonné peut être en visite ou VPLMN (acronyme de l'anglais visited PLMN).

Un appel peut exister dans un VMSC 3 (centre de commutation de mobiles visité, acronyme de l'anglais visited mobile-services switching centre) où se trouve l'abonné 4. Il s'agit typiquement d'une communication en cours; dans l'exemple de la figure 1, le VMSC 3 est représenté dans le HPLMN comme dans le VPLMN, dans la mesure où il peut se trouver dans l'un ou l'autre de ces réseaux.

Un appel peut aussi exister dans un VMSC 5 autre que celui où se trouve l'abonné à un instant donné, et dans lequel l'abonné était auparavant. Ceci peut par exemple être le cas, pour un service de renvoi d'appel, pour un appel 6 renvoyé dans le VMSC 5, et qui n'est pas terminé lorsque l'abonné quitte le VMSC 5; de nouveau, dans l'exemple de la figure 1, le VMSC 5 est représenté dans le HPLMN comme dans le VPLMN, dans la mesure où il peut se trouver dans l'un ou l'autre de ces réseaux.

Un appel peut encore exister dans un GMSC 7 ou centre de commutation de mobile utilisé en point d'accès du réseau (acronyme de l'anglais gateway MSC) du réseau d'origine. C'est typiquement le cas pour un appel renvoyé dans le GMSC pour un renvoi inconditionnel 8.

Un appel peut aussi exister à un instant donné dans un GMSC 13 d'un autre réseau 2. Ceci peut être le cas si la fonction "optimal routing" du GSM est activée. Cette fonction permet, lorsqu'un abonné du HPLMN est appelé par un mobile localisé dans un VPLMN, d'établir un renvoi d'appel vers un abonné du pays de ce VPLMN sans faire passer l'appel par le pays du HPLMN de l'abonné appelé. On a représenté sur la figure 1 le cas d'un appel vers un abonné du HPLMN, lorsque l'abonné demandeur 4 se trouve dans un VMSC 11 du réseau 2. La flèche 12 montre un renvoi vers un poste fixe du VPLMN, via un GMSC 13.

Dans toutes ces circonstances, il peut être utile, pour une interruption de service, d'interrompre tous ces appels.

Pour fournir ce service, les solutions suivantes ont été proposées; un service du réseau intelligent existe sous l'appellation CAMEL (acronyme de Customised application for mobile network enhanced logic, application adaptée en logique améliorée pour réseau mobile) pour certains abonnés. Pour un abonné CAMEL, le réseau public mobile d'origine de l'abonné ou HPLMN peut contrôler toutes les activités de l'abonné partout dans le monde; il peut donc les interrompre, tant dans les MSC (centre de commutation de mobiles, acronyme de l'anglais mobile-services switching centre) où peut exister un appel en cours, tant dans le HPLMN que dans les réseaux visités ou VPLMN (acronyme de l'anglais visited PLMN). Cette faculté est offerte au HPLMN, pour ce qui concerne les GMSC (MSC d'accès au réseau) que dans les VMSC (MSC visités, acronyme de l'anglais visited MSC).

Cette solution présente les inconvénients suivants: elle ne fonctionne pas pour les abonnés qui ne sont pas des abonnés CAMEL lors de la décision d'interruption du service ; il est difficilement envisageable de mettre par précaution l'ensemble des abonnés sous CAMEL, simplement pour permettre le cas échéant une interruption de service: le service CAMEL est très consommateur de ressources, de commutateurs et de plates-formes de noeuds d'interrogation, et on ne peut pas savoir à un instant donné quel abonné est susceptible de faire l'objet d'une décision d'interruption de service.

Il est aussi connu d'appliquer une interruption de service dans le VMSC où se trouve l'abonné lors de la décision d'interruption. Ceci est possible par une simple commande d'ODB (acronyme de l'anglais operator determined barring, ou interdiction déterminée par l'opérateur), émise par le PLMN dans le VMSC où se trouve l'abonné. De fait, à tout instant, le registre de localisation d'origine ou HLR (acronyme de l'anglais home location register) du réseau d'origine connaît le VMSC où se trouve l'abonné.

Cette solution n'est pas suffisante, dans la mesure où elle ne permet pas d'interrompre tous les appels en cours; comme le montre la figure 1, une commande d'ODB permet d'interrompre une communication d'un abonné 4 dans le VMSC 3 où il se trouve; elle ne permet pas d'interrompre les appels dans un VMSC 5 où l'abonné se trouvait auparavant. Ceci peut par exemple être le cas, pour un service de renvoi d'appel, pour un appel renvoyé dans le VMSC 5, et qui n'est pas terminé lorsque l'abonné quitte le VMSC 5, ou pour les appels dans les GMSC du réseau d'origine, ou encore pour les appels dans un GMSC d'un VPLMN lorsque la fonction de routage optimal est activée.

II a encore été proposé d'arrêter toute activité dans un VMSC autre que celui dans lequel se trouve l'abonné, après une durée T₀ compté après le moment où les données d'abonné ont été effacées du VLR (registre de localisation des visiteurs, acronyme de l'anglais visitor location register) du VMSC. En d'autres termes, on interrompt toutes les activités (telles que renvoi conditionnel, appel redirigé ou transféré, etc.) une durée donnée après le départ de l'abonné du VMSC.

Cette solution n'est pas non plus satisfaisante. Une durée T₀ trop courte risque de perturber le service offert aux abonnés pour lesquels l'interruption de service n'est pas mise en oeuvre. Une durée trop longue conduit à des facturations importantes, qui en cas d'interruption de service, restent à la charge de l'opérateur. De ce point de vue, les opérateurs dans le GSM ont proposé que la durée T₀ soit calibrée par le HPLMN; ceci permet d'adapter la durée T₀ en fonction des abonnés, mais complique encore la réalisation de l'IST, en nécessitant des messages supplémentaires.

Le document US-A-5 420 910 décrit un procédé pour interrompre le service, fondé sur une observation du comportement des abonnés. Un éditeur de canal de commande intercepte les demandes d'établissement d'appel provenant des terminaux mobiles, et compare une ou plusieurs caractéristique de chaque terminal appelant, avec des données d'une base de données contenant des données identifiant chaque terminal dont le comportement permet de penser que son usager est un fraudeur. Si un appel est reconnu comme provenant d'un fraudeur, l'éditeur interrompt l'établissement de l'appel.

L'invention propose une solution pratique aux problèmes de l'interruption de service. Elle assure une interruption de service efficace, mais qui ne pénalise pas les abonnés légitimes. Elle propose une solution moins consommatrice de ressources que CAMEL

Plus précisément, l'invention propose un procédé d'interruption de service dans un réseau téléphonique mobile, comprenant l'étape d'envoi par un centre de commutation du réseau, en présence d'un appel dans des conditions anormales, d'un message d'alerte vers le réseau d'origine de l'abonné à facturer pour cet appel.

Dans un mode de réalisation, le procédé comprend l'envoi par le réseau d'origine de l'abonné d'un message d'interruption de service si l'abonné fait l'objet d'une demande d'interruption de service. On peut prévoir l'envoi par le réseau d'origine de l'abonné d'un message de réponse au message d'alerte, que l'abonné fasse ou non l'objet d'une demande d'interruption de service.

Avantageusement, l'envoi d'un message d'alerte est effectué pour tout appel supérieur à une durée prédéterminée.

Dans un mode de mise en oeuvre, l'envoi d'un message d'alerte est répété, de préférence périodiquement, si l'appel se poursuit.

Dans un autre mode de réalisation, le centre de commutation dans lequel se trouve un abonné n'envoie pas de message d'alerte.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation des différents appels dans un réseau de téléphonie mobile;
- figure 2 une représentation schématique d'un interruption de service selon l'invention.

Dans la suite de la présente description, on considérera l'exemple du GSM, étant entendu que la présente invention n'est pas limitée à ce réseau de téléphonie mobile, mais s'applique aussi bien à d'autres types de réseaux de télécommunications.

L'invention propose, pour gérer les interruptions de service, de transmettre sous certaines conditions une "alerte" vers le réseau d'origine de l'abonné, de sorte à permettre en retour l'interruption des appels, si cela est nécessaire.

Cette solution évite que les abonnés légitimes - normalement plus nombreux que ceux auxquels on applique l'IST - ne soient pénalisés par les mécanismes mis en place pour assure l'IST. Elle garantit en outre l'efficacité de l'IST, sans consommation de ressources importante. L'invention s'applique à l'ensemble des activités de l'abonné, dans l'ensemble du monde GSM, sans nécessiter de diffusion générale de l'interruption de service, ni de traçage de l'ensemble des abonnés. Elle est compatible avec le routage optimal.

L'invention peut être mise en oeuvre dans le VMSC où se trouve l'abonné; toutefois, ceci n'est pas indispensable, dans la mesure où la commande d'ODB constitue une solution permettant l'interruption des appels dans ce VMSC.

Dans les autres centres de commutations, qu'il s'agisse des VMSC et des GMSC du réseau d'origine, ou des VMSC ou GMSC d'un réseau visité, l'invention propose, lorsque les conditions d'un appel paraissent anormales, d'envoyer un message d'alerte vers le réseau d'origine de l'abonné à facturer. Le réseau d'origine recevant ce message d'alerte peut alors répondre par une demande d'interruption d'appels, si l'abonné fait l'objet d'une demande d'interruption de service.

Pour déclencher l'envoi d'un message d'alerte, i. e. pour déterminer dans quelles conditions un appel paraît anormal, on peut utiliser comme critère la durée de l'appel après que l'abonné a quitté le VMSC correspondant, ou la durée de l'appel renvoyé.

La figure 2 montre, pour le GMSC 7, le message d'alerte envoyé vers le HLR 14 du HPLMN 1. Ce message est par exemple envoyé lorsque l'appel 8 renvoyé présente une durée T₀ très supérieure à la durée normale; un choix d'un quart d'heure ou d'une demi-heure est approprié. Le réseau d'origine peut répondre à ce message d'alerte, en demandant l'interruption de l'appel, par exemple si l'abonné a entre temps fait l'objet d'une demande d'interruption de service. Ceci est symbolisé par la flèche 16. Le GMSC peut alors interrompre l'appel 8. Si l'abonné ne fait pas l'objet d'une demande d'interruption de service, le réseau d'origine peut ne pas répondre: cette solution a pour avantage de réduire le trafic. Il est aussi possible de prévoir que le réseau d'origine répond en tout état de cause, ou ne répond que si l'appel peut être poursuivi.

La même solution peut être mise en oeuvre pour le GMSC 9 d'un réseau visité; ceci n'est pas représenté sur la figure. La solution est indépendante de la mise en oeuvre d'un routage optimal, et s'applique aussi si un tel routage est en place. De fait, un GMSC du réseau visité 2, tout comme le GMSC 7 envoie un message d'alerte vers le réseau d'origine dès que l'appel dépasse une durée prédéterminée.

On appréciera que si l'abonné ne fait pas l'objet d'une demande d'IST, l'appel 8 ou 12 est poursuivi, et la qualité du service est donc maintenue.

Pour le VMSC 3 dans lequel se trouve l'abonné, une commande 17 d'ODB, connue en soi, permet d'interrompre les appels de l'abonné.

Dans le VMSC 5 où se trouvait auparavant l'abonné, l'invention propose aussi d'envoyer un message d'alerte 20 vers le réseau d'origine; ce message d'alerte peut par exemple être envoyé une durée T₁ - qui peut être égale à la durée T₀ - après le moment où les données d'abonné ont été effacées du VLR du VMSC 5. Comme dans le cas du GMSC 7, ce message peut ou non provoquer une réponse 21, si l'abonné ne fait pas l'objet d'une demande d'IST. Comme pour le GMSC 7, le service est maintenu si l'abonné ne fait pas l'objet d'une demande d'IST, et l'existence du service d'IST est transparente pour l'abonné

Le choix des durées T₀ et T₁ dépend des contraintes sur le service d'IST, et de la surcharge de trafic générée par les messages d'alerte qui est acceptable. Une durée d'un quart d'heure ou d'une demi-heure, comme mentionné plus haut, est un compromis acceptable entre les sommes non facturables et le trafic généré par les messages d'alerte. Cette durée est en effet largement supérieure à la durée moyenne des appels.

La solution de l'invention permet en outre au réseau d'origine de contrôler les appels d'une durée supérieure à T₀ ou T₁. On permet ainsi au réseau de contrôler les appels au delà d'une durée moyenne; outre des fins statistiques, ceci peut permettre de détecter des utilisations frauduleuses, par exemple par comparaison avec les durées moyennes des appels passés d'un abonné.

Dans un mode de mise en oeuvre particulièrement avantageux, l'envoi du message d'alerte est répétée périodiquement, si l'appel se poursuit; ceci permet non seulement de contrôler les appels longs, mais aussi de maintenir ce contrôle si l'appel se poursuit. La période T₂ de répétition du message d'alerte peut être différente des durées T₀ et T₁, ou encore leur être égale. On notera que la période T₂ peut facilement être inférieure à la durée T₀ ou T₁, dans la mesure où la surcharge de trafic générée est de moins en moins importante avec le temps, le nombre d'appels décroissant généralement avec la durée.

Bien entendu, la présente invention n'est pas limitée aux exemples et modes de réalisation décrits et représentés, mais elle est susceptible de nombreuses variantes accessibles à l'homme de l'art. On pourrait ainsi utiliser des durées T₀, T₁ ou T₂ différentes de celles données en exemple, en fonction des besoins.

De nouveau, l'invention qui a été décrite en référence au GSM, s'applique aussi à d'autres réseaux de téléphonie mobile, et par exemple au réseau UMTS, et à d'autres réseaux.

## Revendications

1. Procédé d'interruption de service dans un réseau téléphonique mobile, comprenant l'étape d'envoi par un centre de commutation (7, 5) du réseau, en présence d'un appel dans des conditions anormales, d'un message d'alerte (15, 20) vers le réseau d'origine (1) de l'abonné (4) à facturer pour cet appel ;
et comprenant l'envoi par le réseau d'origine de l'abonné d'un message d'interruption de service (16, 21) si l'abonné fait l'objet d'une demande d'interruption de service.

2. Procédé selon la revendication 1, **caractérisé en ce qu'**il comprend l'envoi par le réseau d'origine de l'abonné d'un message de réponse (16, 21) au message d'alerte, que l'abonné fasse ou non l'objet d'une demande d'interruption de service.

3. Procédé selon la revendication 1 ou 2, **caractérisé en ce que** l'envoi d'un message d'alerte est effectué pour tout appel supérieur à une durée prédéterminée (T₀, T₁).

4. Procédé selon l'une des revendications 1 à 3, **caractérisé en ce que** l'envoi d'un message d'alerte est répété, de préférence périodiquement, si l'appel se poursuit.

5. Procédé selon l'une des revendications 1 à 4, **caractérisé en ce que** le centre de commutation dans lequel se trouve un abonné n'envoie pas de message d'alerte.

## Patentansprüche

1. Verfahren zur Dienstunterbrechung in einem Mobiltelefonnetz mit dem Schritt des Sendens, durch eine Vermittlungszentrale (7, 5) des Netzes in Gegenwart eines Anrufs unter anomalen Bedingungen, einer Warnnachricht (15, 20) an das Ursprungsnetz (1) des Kunden (4, 2), dem dieser Anruf in Rechnung zu stellen ist;
und mit dem Senden einer Dienstunterbrechungsnachricht (16, 21) durch das Ursprungsnetz des Kunden, wenn der Kunde Gegenst and einer Dienstunterbrechungsanforderung ist.

2. Verfahran nach Anspruch 1, **dadurch gekennzeichnet, dass** es das Senien einer Antwortnachricht (16, 21) auf die Warnnachricht durch das Ursprungsnetz des Kunden umfasst, unabhängig davon, ob der Kunde Gegenstand einer Dienstunterbrechungsanforderung ist oder nicht.

3. Verfahren nach Anspruch 1 oder 2, **dadurch gekennzeichnet, dass** das Senden einer Warnnachricht für jeden Anruf durchgeführt wird, der länger als eine vorgegebene Dauer (T₀, T₁) ist.

4. Verfahren nach einem der Ansprüche 1 bis 3, **dadurch gekennzeichnet, dass** das Senden einer Warnnachricht wiederholt wird, vorzugsweise periodisch, wenn der Anruf weitergeht.

5. Verfahren nach einem der Ansprüche 1 bis 4, **dadurch gekennzeichnet, dass** die Vermittlungszentrale, in der sich ein Kunde befindet, keine Warnnachricht sendet.

## Claims

1. A method of terminating service in a mobile telephone network, the method comprising a step in which, in the presence of a call under abnormal conditions, a switching center (7, 5) of the network sends an alarm message (15, 20) to the home network (1) of the subscriber (4) to be charged for said call;
and comprising the home network of the subscriber sending a service termination message (16, 21) if the subscriber is the subject of a service termination request.

2. A method according to claim 1, **characterized in that** it comprises a step in which the home network of the subscriber sends a response message (16, 21) in response to the alarm message, regardless of whether or not the subscriber is the subject of a service termination request.

3. A method according to claim 1 or 2, **characterized in that** an alarm message is sent for any call longer than a predetermined duration (T₀, T₁).

4. A method according to any one of claims 1 to 3, **characterized in that** the sending of an alarm message is repeated, preferably periodically, if the call continues.

5. A method according to any one of claims 1 to 4, **characterized in that** the switching center in which a subscriber is located does not send any alarm message.
